# EUROPEAN PATENT APPLICATION

(11) **EP 4 742 377 A1**
(43) Date of publication of application: **13.05.2026**
(21) Application number: 25779180.6
(22) Date of filing: 13.01.2025
(51) Int. Cl.: H01M 10/659, H01M 10/613, H01M 10/658, H01M 50/242, H01M 50/502, H01M 50/249, H01M 10/6551

(54) **BATTERY PACK AND VEHICLE COMPRISING BATTERY PACK**

(30) Priority: 27.03.2024 KR 20240042000
(71) Applicant: LG Energy Solution, Ltd., Seoul 07335 (KR)
(72) Inventor: LIM, Jeong-Hoon, Daejeon 34122 (KR); LEE, Young-Kyu, Daejeon 34122 (KR)
(74) Representative: BCKIP Part mbB
(86) International application number: PCT/KR2025/000712
(87) International publication number: WO 2025/206548

(57) **Abstract**

Disclosed is a battery pack, which includes a plurality of battery cells; a cell frame configured to accommodate the plurality of battery cells; a first filling member filled between the plurality of battery cells within the cell frame; and a second filling member filled within the cell frame to be in contact with the first filling member.

## Description

### TECHNICAL FIELD

The present disclosure relates to a battery pack and a vehicle including the battery pack, and more particularly, to a battery pack with improved cooling performance and safety and a vehicle including the battery pack.

This application is based on and claims priority from Korean Patent Application No. 10-2024-0042000, filed on March 27, 2024, with the Korean Intellectual Property Office, the disclosure of which is incorporated herein in its entirety by reference.

### BACKGROUND ART

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. The secondary battery is drawing attentions as a new energy source for enhancing energy efficiency and environment friendliness in that the use of fossil fuels can be reduced greatly and no byproduct is generated during energy consumption.

Secondary batteries widely used at present include lithium ion batteries, lithium polymer batteries, nickel cadmium batteries, nickel hydrogen batteries, nickel zinc batteries and the like. An operating voltage of the unit secondary battery cell, namely a unit battery cell, is about 2.5V to 4.2V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Recently, in the case of battery packs, the demand for large-capacity battery packs as a collection of a plurality of battery cells is increasing in order to secure capacity. In the case of such large-capacity battery packs, securing cooling performance is considered more important. In addition, in terms of securing the safety of battery packs, which has been considered more important recently, a structure that prevents heat transfer to adjacent battery cells when a situation such as thermal runaway of a specific battery cell occurs is also emerging as an important design factor.

Therefore, there is a need to find a way to provide a battery pack that may secure safety by increasing cooling performance and preventing heat transfer to adjacent battery cells when a situation such as thermal runaway of a specific battery cell occurs, and a vehicle including the same.

### DISCLOSURE

### Technical Problem

Therefore, the present disclosure is directed to providing a battery pack capable of improving cooling performance, and a vehicle including the battery pack.

In addition, the present disclosure is also directed to providing a battery pack capable of improving safety by preventing heat transfer, and a vehicle including the battery pack.

Moreover, the present disclosure is also directed to providing a battery pack capable of improving manufacturing efficiency, and a vehicle including the battery pack.

However, the technical problems that the present disclosure seeks to solve are not limited to the above, and other problems not mentioned herein will be clearly understood by those skilled in the art from the following description.

### Technical Solution

In one aspect of the present disclosure, there is provided a battery pack comprising: a plurality of battery cells; a cell frame configured to accommodate the plurality of battery cells; a first filling member filled between the plurality of battery cells within the cell frame; and a second filling member filled within the cell frame to be in contact with the first filling member.

Also, preferably, the second filling member may be filled to cover the first filling member so that the first filling member is sealed within the cell frame.

Also, preferably, the first filling member may be filled so that a part of the plurality of battery cells is immersed within the cell frame, and the second filling member may be filled so that the remaining part of the plurality of battery cells is immersed within the cell frame.

Also, preferably, the cell frame may include a frame body configured to accommodate the plurality of battery cells; and a frame cover coupled with the frame body and configured to cover an upper side of the plurality of battery cells, and the first filling member may be filled to a height equal to or lower than a height of an upper end of the frame body.

Also, preferably, the second filling member may be continuously filled from the frame cover to a part within the frame body where the second filling member comes into contact with the first filling member.

Also, preferably, the first filling member may contain a phase change material.

Also, preferably, the first filling member may contain a paraffin material.

Also, preferably, the second filling member may be made of the same material as the first filling member.

Also, preferably, the second filling member may be made of a glass bead resin.

Also, preferably, the second filling member may be made of silicone foam.

Also, preferably, the frame cover may include a cover body coupled with the frame body; and a guide protrusion extending from an edge of the cover body to a predetermined height, and the second filling member may be filled up to an end of the guide protrusion.

Also, preferably, the frame cover may include a cell insert portion formed on the cover body so that an end of the plurality of battery cells is inserted therein.

Also, preferably, the battery pack may further comprise a heatsink provided at one side of the cell frame to cool the plurality of battery cells.

Also, preferably, an opening for exposing an end of the plurality of battery cells toward the heatsink may be formed at one side of the cell frame facing the heatsink.

Also, preferably, the battery pack may further comprise an adhesive member provided between the cell frame and the heatsink to seal the first filling member together with the second filling member.

Also, preferably, the battery pack may further comprise a bus bar assembly mounted on the cover body at a bottom portion of the guide protrusion and electrically connected to the plurality of battery cells.

Also, preferably, the second filling member may be filled to cover the bus bar assembly.

In addition, the present disclosure also provides a vehicle, comprising at least one battery pack according to the former embodiments.

### Advantageous Effects

According to various embodiments as above, it is possible to provide a battery pack capable of improving cooling performance, and a vehicle including the battery pack.

In addition, according to various embodiments as above, it is possible to provide a battery pack capable of improving safety by preventing heat transfer, and a vehicle including the battery pack.

Moreover, according to various embodiments as above, it is possible to provide a battery pack capable of improving manufacturing efficiency, and a vehicle including the battery pack.

Moreover, various other additional effects may be achieved by various embodiments of the present disclosure. The various effects of the present disclosure will be explained in detail in each embodiment, or the effects that can be easily understood by those skilled in the art will not be described herein.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic view for illustrating a battery pack according to an embodiment of the present disclosure.
FIG. 2 is a schematic view for illustrating a cell frame of the battery pack of FIG. 1.
FIG. 3 is a schematic view for illustrating a frame cover of the cell frame of FIG. 2.
FIGS. 4 to 9 are schematic views for illustrating a process of manufacturing the battery pack according to an embodiment of the present disclosure.
FIG. 10 is a schematic view for illustrating a battery pack according to another embodiment of the present disclosure.
FIG. 11 is an enlarged view showing a part A of the battery pack of FIG. 10.
FIG. 12 is a schematic view for illustrating a battery pack according to still another embodiment of the present disclosure.
FIG. 13 is a drawing for illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Meanwhile, in this specification, terms indicating directions such as "upper", "lower", "left", "right", "front", and "rear" may be used, but these terms are only for convenience of explanation, and it is obvious to those skilled in the art these terms may vary depending on the location of a target object or the location of an observer.

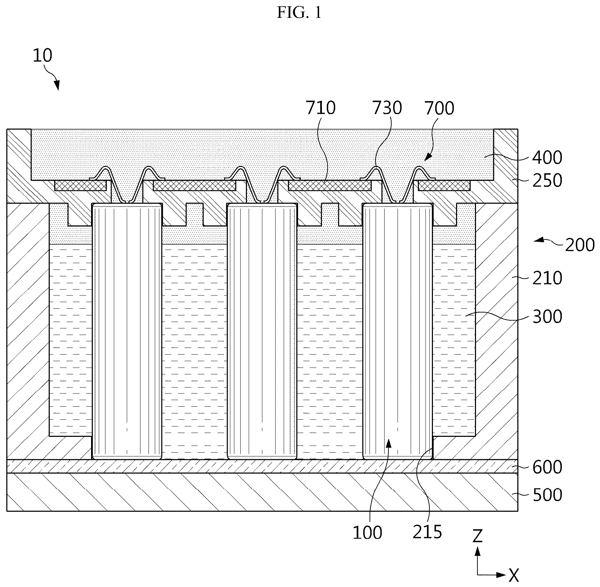

FIG. 1 is a schematic view for illustrating a battery pack according to an embodiment of the present disclosure.

Referring to FIG. 1, the battery pack 10 may include a battery cell 100, a cell frame 200, a first filling member 300, and a second filling member 400.

The battery cell 100 is a secondary battery, and may be provided as a cylindrical secondary battery, a pouch-shaped secondary battery, or a rectangular secondary battery. The battery cell 100 may be provided in plurality. The plurality of battery cells 100 may be arranged in parallel or stacked in multiple stages so as to be electrically connected to each other.

The cell frame 200 may accommodate the plurality of battery cells 100. To this end, the cell frame 200 may have an accommodation space for accommodating the plurality of battery cells 100.

The first filling member 300 may be filled between the plurality of battery cells 100 within the cell frame 200. The first filling member 300 may implement passive cooling within the cell frame 200. To this end, the first filling member 300 may contain a cooling material capable of cooling the battery cells 100. In addition, since the first filling member 300 is filled between the plurality of battery cells 100, in the event of an abnormal situation such as thermal runaway and ignition of a specific battery cell, heat transfer and flame toward adjacent battery cells may be blocked. To this end, the first filling member 300 may contain a flame retardant material. The material constituting the first filling member 300 will be described in more detail later.

The second filling member 400 may be filled within the cell frame 200 to be in contact with the first filling member 300. The second filling member 400, together with the first filling member 300, may cool the battery cells 100 within the cell frame 200 and block heat transfer and flame toward the adjacent battery cells 100 in the event of an abnormality in the battery cells 100.

According to an embodiment of the present disclosure, cooling performance of the battery cells 100 may be secured with a simpler structure through the first filling member 300 and the second filling member 400 filled between the battery cells 100 within the cell frame 200.

In addition, according to an embodiment of the present disclosure, heat transfer and flame from a trigger cell side toward adjacent cells may be effectively blocked in an abnormal situation such as thermal runaway through the first filling member 300 and the second filling member 400.

Therefore, the battery pack 10 according to an embodiment of the present disclosure may secure both cooling performance and safety of the battery cells 100 through the first filling member 300 and the second filling member 400.

The second filling member 400 may be filled to cover the first filling member 300 so as to seal the first filling member 300 within the cell frame 200. Specifically, the second filling member 400 may be filled to completely cover the first filling member 300 within the cell frame 200. According to an embodiment of the present disclosure, the second filling member 400 may effectively prevent leakage or outflow of the first filling member 300 to the outside of the cell frame 200.

The first filling member 300 may be filled so that a part of the plurality of battery cells 100 is immersed within the cell frame 200. Also, the second filling member 400 may be filled so that the remaining part of the plurality of battery cells 100 is immersed within the cell frame 200. As a result, the plurality of battery cells 100 may be completely immersed within the cell frame 200 by the first filling member 300 and the second filling member 400. Therefore, the cooling performance and safety of the battery cells 100 may be further improved.

Hereinafter, the cell frame 200 of the present disclosure will be described in more detail.

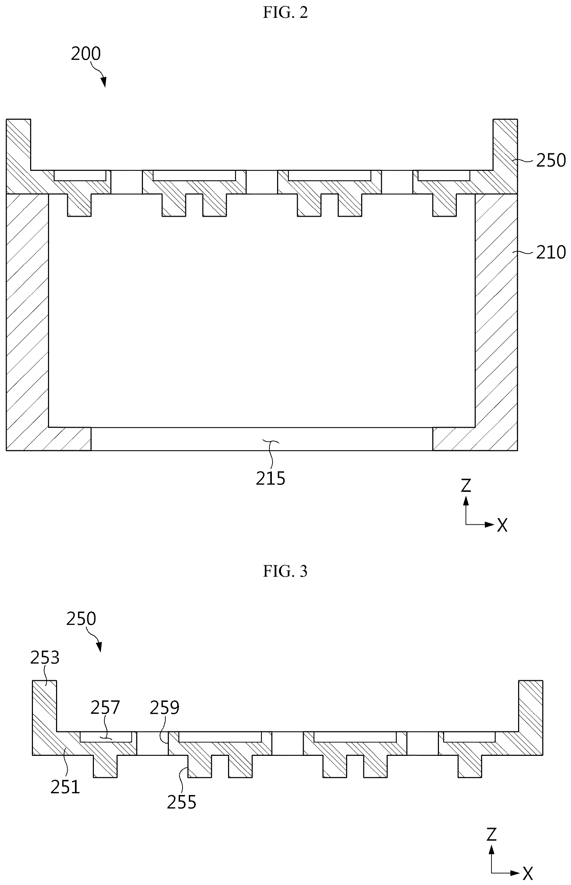

FIG. 2 is a schematic view for illustrating a cell frame of the battery pack of FIG. 1, and FIG. 3 is a schematic view for illustrating a frame cover of the cell frame of FIG. 2.

Referring to FIGS. 2 and 3 along with FIG. 1, the cell frame 200 may include a frame body 210 and a frame cover 250.

The frame body 210 may accommodate the plurality of battery cells 100. To this end, a predetermined accommodation space capable of accommodating the plurality of battery cells 100 may be formed in the frame body 210.

The frame cover 250 may be coupled with the frame body 210. The frame cover 250 may cover the upper side of the plurality of battery cells 100 at the upper side of the frame body 210.

The first filling member 300 may be filled to a height equal to or lower than the height of the upper end of the frame body 210. That is, the first filling member 300 may be filled within the frame body 210 to a height that does not overflow out of the frame body 210. Therefore, leakage or outflow out of the frame body 210 due to the filling of the first filling member 300 may be effectively prevented. The filling height of the first filling member 300 may be a preset height for ensuring cooling and safety of the battery cells 100. Therefore, in this embodiment, leakage or outflow out of the frame body 210 due to the filling of the first filling member 300 may be more reliably prevented, and cooling and safety of the battery cells 100 may also be ensured. The second filling member 400 may be continuously filled from the frame cover 250 to a part within the frame body 210 where the second filling member 400 comes into contact with the first filling member 300. Accordingly, the second filling member 400 may be filled within the inner space of the frame cover 250 and the frame body 210 without a separate space. In addition, through the second filling member 400, leakage or outflow of the first filling member 300 to the outside of the cell frame 200 may be more reliably prevented.

The first filling member 300 may contain a phase change material. The first filling member 300 may more stably fix the plurality of battery cells 100 within the cell frame 200 and increase the heat dissipation efficiency of the plurality of battery cells 100, thereby further increasing the cooling performance of the battery cells 100.

The first filling member 300 may delay the temperature rise of the battery cells 100 even in situations such as rapid charging and discharging of the battery cells 100 by increasing the thermal mass, thereby preventing a rapid temperature rise of the battery cells 100.

In addition, the first filling member 300 may perform an insulating role to prevent electric connection to adjacent battery cells 100 when damage or the like occurs due to an abnormal situation in at least one specific battery cell 100 among the plurality of battery cells 100.

Moreover, the first filling member 300 may guide the thermal equilibrium of the battery cells 100, thereby preventing cooling deviation of the battery cells 100 and preventing local deterioration of the battery cells 100. In addition, the safety of the battery cells 100 may also be significantly improved by preventing local deterioration of the battery cells 100.

The first filling member 300 may contain a paraffin material as the phase change material. The first filling member 300 containing the paraffin material may increase the thermal mass while existing in a solid state in a range below a predetermined temperature, and may increase cooling performance of the battery cells 100 through latent heat of phase change while changing into a liquid state in a range above a predetermined temperature. The predetermined temperature may be approximately 40°C.

In addition, the first filling member 300 may contain a silicone material. The first filling member 300 containing the silicone material may further increase the thermal mass and prevent leakage when the phase change material is liquefied. The silicone material may be provided as, for example, a two-component silicone.

Also, the first filling member 300 may contain a flame retardant material having high flame retardant performance. Accordingly, the first filling member 300 may minimize the risk of fire when a thermal event such as overheating occurs in at least one specific battery cell 100 among the plurality of battery cells 100. The flame retardant material may include, for example, aluminum hydroxide.

In addition, in this embodiment, the first filling member 300 may be made of a potting resin that includes all of the paraffin material as the phase change material, the silicone material, and the flame retardant material.

The second filling member 400 may be made of the same material as the first filling member 300. For example, the second filling member 400 may also be made of a potting resin that includes all of the paraffin material as the phase change material, the silicone material, and the flame retardant material. Therefore, according to an embodiment of the present disclosure, the efficiency of the filling process of the battery pack 10 may be increased through a single filling member.

The second filling member 400 may be made of a glass bead resin. The glass bead resin may lower the specific gravity of the second filling member 400 and increase the energy density for its weight.

The second filling member 400 may be made of silicone foam having high elasticity, compression resistance, flame retardancy, etc. Therefore, according to an embodiment of the present disclosure, an external impact or the like may be effectively absorbed and buffered through the second filling member 400, thereby further increasing the safety of the battery cells 100.

The frame cover 250 may include a cover body 251 and a guide protrusion 253.

The cover body 251 may be coupled with the frame body 210. The cover body 251 may be provided in a shape and size that may cover the upper side of the frame body 210.

The guide protrusion 253 may be formed to extend from the edge of the cover body 251 to a predetermined height. Specifically, the guide protrusion 253 may be formed to protrude from the end of the edge of the cover body 251 to a predetermined height.

The second filling member 400 may be filled up to the end of the guide protrusion 253. According to an embodiment of the present disclosure, more accurate and stable filling of the second filling member 400 may be guided through the guide protrusion 253, and also overflow or the like that may occur during filling of the second filling member 400 may be effectively prevented.

The frame cover 250 may include a cell insert portion 255.

The cell insert portion 255 may be formed on the cover body 251. Specifically, the cell insert portion 255 may be formed on the bottom portion of the cover body 251 and may be provided in a number corresponding to the number of the plurality of battery cells 100. An end of the plurality of battery cells 100 may be inserted into the cell insert portion 255. Specifically, an upper end of the plurality of battery cells 100 may be inserted into the cell insert portion 255.

According to an embodiment of the present disclosure, one end of the battery cells 100 may be fixed and supported through the cell insert portion 255, so that the battery cells 100 may be more stably fixed within the cell frame 200. In addition, according to an embodiment of the present disclosure, since the upper end of the battery cells 100 is fixed through the cell insert portion 255, movement of the battery cells 100 that may occur during the injection process of the second filling member 400 may also be prevented.

The battery pack 10 may include a heatsink 500.

The heatsink 500 is for cooling the plurality of battery cells 100 and may be provided at one side of the cell frame 200. Specifically, the heatsink 500 may be arranged on the bottom portion of the cell frame 200. The battery pack 10 according to an embodiment of the present disclosure may further improve the cooling performance of the plurality of battery cells 100 through the heatsink 500.

An opening 215 may be formed at one side of the cell frame 200 facing the heatsink 500 to expose the end of the plurality of battery cells 100 toward the heatsink 500. The opening 215 may be formed in the bottom portion of the frame body 210. The bottom portion of the plurality of battery cells 100 may be exposed to the bottom portion of the frame body 210 through the opening 215 and may be arranged in contact with or adjacent to the heatsink 500. According to an embodiment of the present disclosure, since the bottom portion of the plurality of battery cells 100 is arranged in contact with the heatsink 500 or is arranged closer to the heatsink 500 through the opening 215, cooling performance of the plurality of battery cells 100 may be further improved.

The battery pack 10 may include an adhesive member 600.

The adhesive member 600 may be provided between the cell frame 200 and the heatsink 500. The adhesive member 600 may guide more stable fixation of the heatsink 500 to the frame body 210 of the cell frame 200.

The adhesive member 600 may more stably fix the bottom portion of the plurality of battery cells 100 exposed on the opening 215 of the frame body 210 onto the heatsink 500.

The adhesive member 600 may contain a material having high thermal conductivity so as to increase the cooling performance of the battery cells 100. In addition, the adhesive member 600 may contain a material having high viscosity and hardness so as to secure fixing stability.

The adhesive member 600 may seal the first filling member 300 together with the second filling member 400 within the cell frame 200. Specifically, the second filling member 400 may seal the first filling member 300 at the upper side (+Z-axis direction) of the cell frame 200, and the adhesive member 600 may seal the first filling member 300 at the lower side (-Z-axis direction) of the cell frame 200. Therefore, according to an embodiment of the present disclosure, the risk of leakage of the first filling member 300, which may be caused when the first filling member 300 undergoes a phase change into a liquid, may be effectively prevented at both the upper and lower sides (+Z-axis direction and -Z-axis direction) of the cell frame 200.

The battery pack 10 may include a bus bar assembly 700.

The bus bar assembly 700 is electrically connected to the plurality of battery cells 100 and may be mounted on the cover body 251 at the bottom portion of the guide protrusion 253.

The bus bar assembly 700 may include a bus bar member 710 and a bonding wire 730.

The bus bar member 710 may be made of a predetermined metal member. The bus bar member 710 may be provided in plurality. The bonding wire 730 may guide the connection between the bus bar member 710 and the plurality of battery cells 100. The bonding wire 730 may be provided in plurality.

The frame cover 250 may include a bus bar mounting portion 257.

The bus bar mounting portion 257 is formed on the upper surface of the frame cover 250 and may accommodate the bus bar member 710. To this end, the bus bar mounting portion 257 is provided as an accommodation groove having a predetermined accommodation space from the upper surface of the frame cover 250 and may be provided in a number corresponding to the bus bar members 710. For example, the bus bar mounting portion 257 may be provided in plurality.

The frame cover 250 may include a bus bar connection guide 259.

The bus bar connection guide 259 is formed on the frame cover 250 and is provided to guide the connection of the bus bar member 710 of the bonding wire 730 and the plurality of battery cells 100, and may be provided as a hole structure having a predetermined opening. The bus bar connection guide 259 may be provided in plurality and may be provided between the plurality of bus bar mounting portions 257.

The second filling member 400 may be filled so as to cover the bus bar assembly 700. Specifically, the second filling member 400 may be filled so as to cover both the plurality of bus bar members 710 and the plurality of bonding wires 730. The second filling member 400 may be continuously filled between the bus bar assembly 700 and the battery cells 100 without a gap or separate space between the bus bar assembly 700 and the battery cells 100 in the vertical direction (Z-axis direction) of the battery cells 100. Since the second filling member 400 is continuously filled between the battery cells 100 and the bus bar assembly 700 in this way without a gap, even heat distribution is implemented without occurrence of heat distribution deviation in the area between the battery cells 100 and the bus bar assembly 700, so that the cooling performance of the battery pack 10 may be significantly improved.

Hereinafter, the process of manufacturing the battery pack 10 according to an embodiment of the present disclosure will be described in more detail.

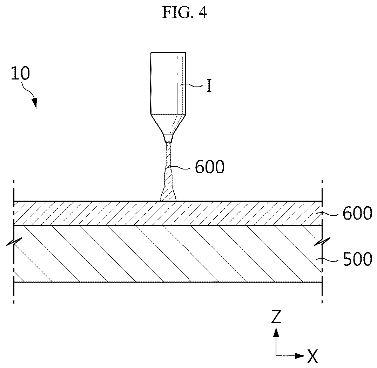

FIGS. 4 to 9 are schematic views for illustrating a process of manufacturing the battery pack according to an embodiment of the present disclosure.

Referring to FIG. 4, a worker or the like, such as a manufacturer, may first place the heatsink 500 and apply the adhesive member 600 onto the heatsink 500 using an injection device I.

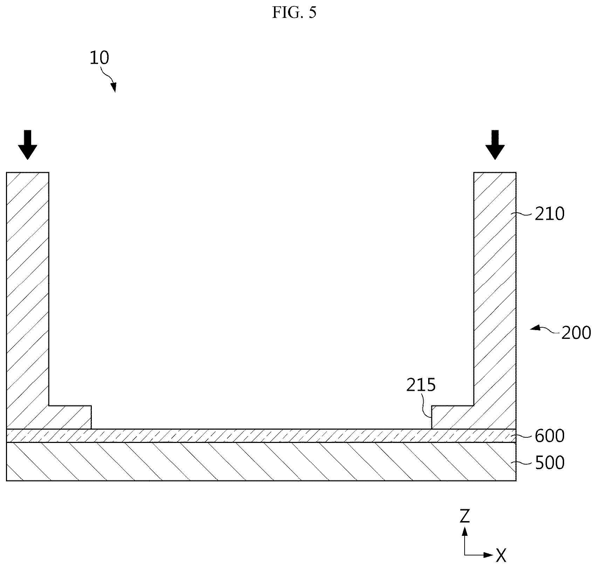

Referring to FIG. 5, the worker or the like may mount the frame body 210 of the cell frame 200 at both sides of the heatsink 500 to which the adhesive member 600 is applied. Here, the adhesive member 600 may be exposed through the opening 215 of the frame body 210.

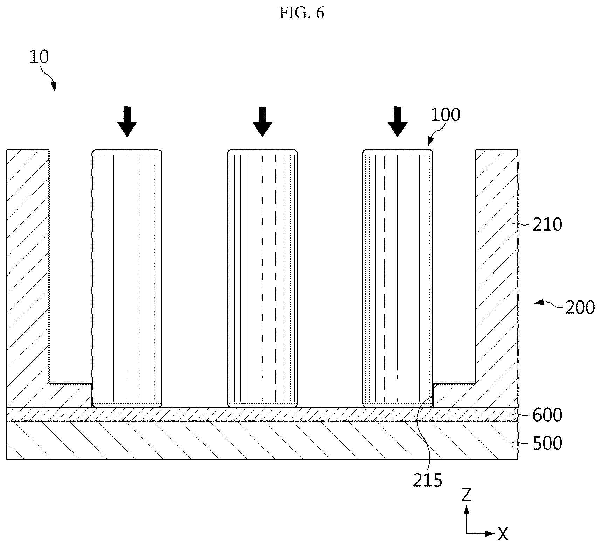

Referring to FIG. 6, the worker or the like may mount the plurality of battery cells 100 within the frame body 210 to be spaced apart by a predetermined distance. Here, a detachable assembly guide jig may be used for stable spacing arrangement of the plurality of battery cells 100. The lower end of the plurality of battery cells 100 may be attached and fixed to the adhesive member 600 through the opening 215 of the cell frame 210.

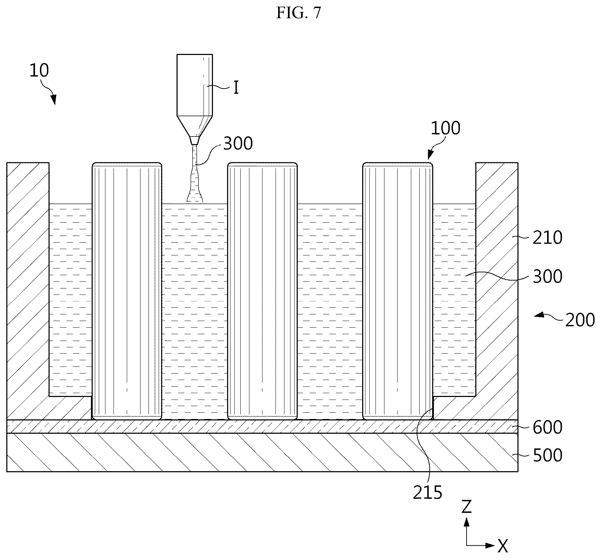

Referring to FIG. 7, the worker or the like may inject the first filling member 300 into the cell frame 210 to a predetermined height through the injection device I. Meanwhile, in the previous step, if the assembly guide jig is used, the injection of the first filling member 300 may be performed after the removal of the assembly guide jig.

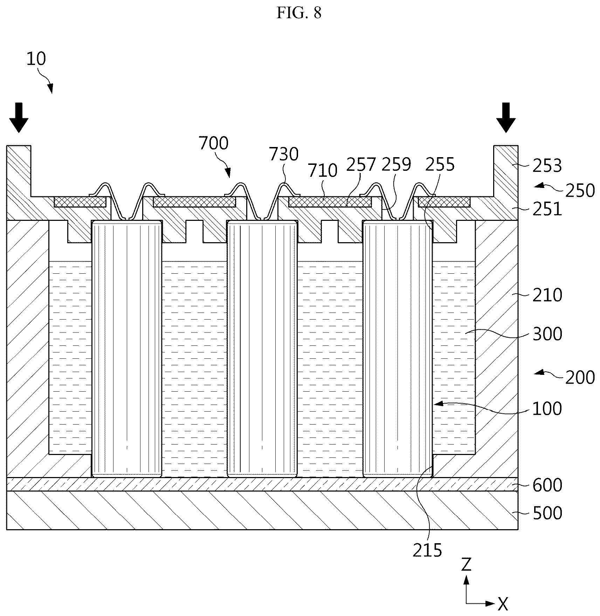

Referring to FIG. 8, the worker or the like may connect the frame cover 250 of the cell frame 200 to the cell frame 200 and the frame body 210. Then, the worker or the like may mount the bus bar assembly 700 to the frame cover 250 and connect the bus bar assembly 700 to the plurality of battery cells 100. Thereafter, if the first filling member 300 is in a liquid state, the worker or the like may cool or leave the first filling member 300 for a predetermined time so that the first filling member 300 changes into a solid state.

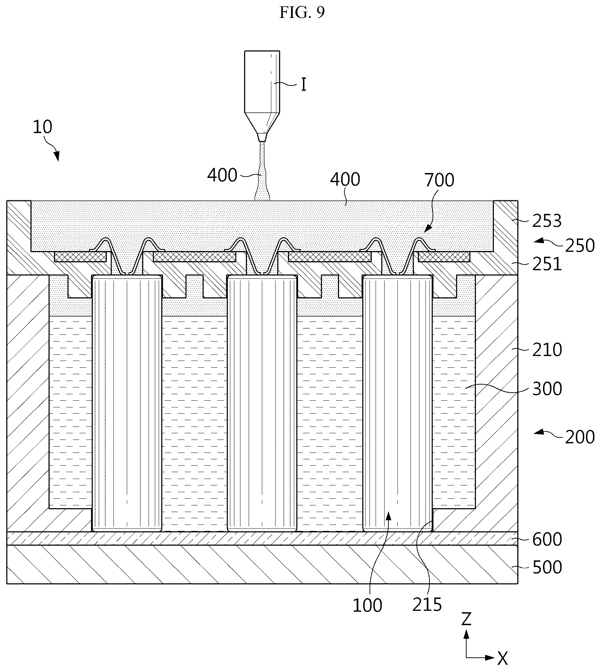

Referring to FIG. 9, finally, the worker or the like may inject the second filling member 400 into the cell frame 200 through the injection device I after the solid phase change of the first filling member 300 is completed. Here, the injection height of the second filling member 400 may be from the upper end of the first filling member 300 to the upper end of the guide protrusion 253 of the frame cover 250. The second filling member 400 may be filled continuously without a break up to the injection height in the cell frame 200 and may be filled to completely cover both the upper end of the battery cells 100 and the bus bar assembly 700.

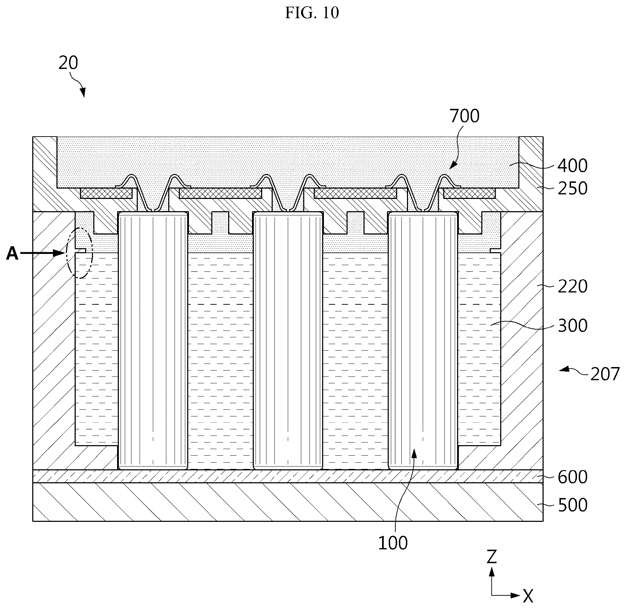

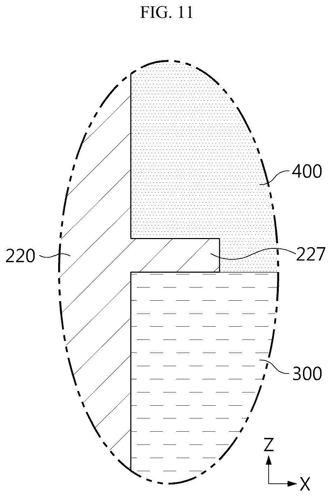

FIG. 10 is a schematic view for illustrating a battery pack according to another embodiment of the present disclosure, and FIG. 11 is an enlarged view showing a part A of the battery pack of FIG. 10.

The battery pack 20 according to this embodiment is similar to the battery pack 10 of the former embodiment, so features substantially identical or similar to those of the former embodiment will not be described again, and features different from the former embodiment will be described in detail.

Referring to FIGS. 10 and 11, the battery pack 20 may include the plurality of battery cells 100, a cell frame 207, the first filling member 300, the second filling member 400, the heatsink 500, the adhesive member 600, and the bus bar assembly 700.

The plurality of battery cells 100 are substantially identical or similar to the former embodiment, and thus will not be described in detail again.

The cell frame 207 may include a frame body 220 and a frame cover 250.

The frame body 220 may include a filling guide 227.

The filling guide 227 may be provided as a projection protruding from the inner surface of the frame body 220 by a predetermined length. The height of the filling guide 227 may be a height corresponding to the filling height of the first filling member 300.

In this embodiment, the filling guide 227 may guide more accurate filling of the first filling member 300 when the first filling member 300 is injected into the cell frame 207.

The frame cover 250 is substantially identical or similar to the former embodiment, and thus will not be described in detail again.

The first filling member 300, the second filling member 400, the heatsink 500, the adhesive member 600, and the bus bar assembly 700 are substantially identical or similar to the former embodiment, and thus will not be described in detail again.

In this way, if the battery pack 20 according to this embodiment is used, the worker or the like may easily visually check the filling height through the filling guide 227 when injecting the first filling member 300, so that the filling accuracy of the first filling member 300 may be improved with a simple structure.

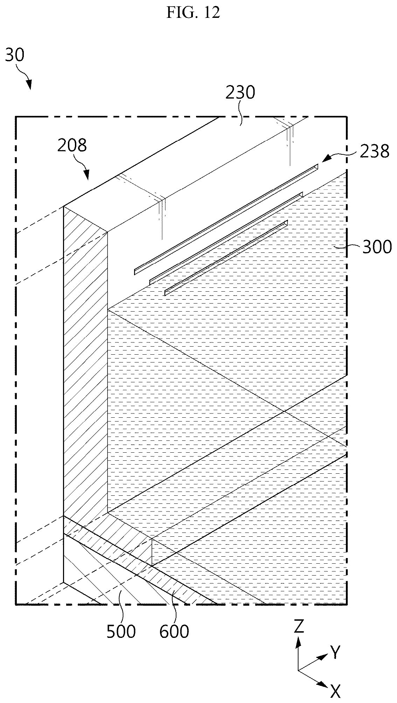

FIG. 12 is a schematic view for illustrating a battery pack according to still another embodiment of the present disclosure.

Since the battery pack 30 according to this embodiment is similar to the battery packs 10, 20 of the former embodiments, components that are substantially identical or similar to those of the former embodiment will not be described in detail again, and components different from those of the former embodiment will be described in detail. Meanwhile, in FIG. 12, some components identical to those of the previous embodiments are not depicted for convenience of explanation.

Referring to FIG. 12, the frame body 230 of the cell frame 208 of the battery pack 30 may include a filling guide 238.

The filling guide 238 is formed on the inner surface of the cell frame 208 and may be provided as a plurality of leveling lines that are spaced apart from each other by a predetermined distance in the height direction (Z-axis direction) of the cell frame 208. The heights of the plurality of leveling lines may correspond to various preset filling heights of the first filling member 300, respectively. The preset filling height of the first filling member 300 may vary depending on the cooling performance required for the capacity or number of the battery cells 100.

According to this embodiment, even if the filling height of the first filling member 300 varies depending on the required filling amount of the first filling member 300, the filling guide 238 provided as the plurality of leveling lines may guide the worker or the like to easily visually check the filling amount. Therefore, the risk that the worker or the like fills the first filling member 300 erroneously may be minimized through the filling guide 238.

The plurality of leveling lines of the filling guide 238 may be formed to have different lengths. In addition to the different lengths, the plurality of leveling lines may also be formed to have different shapes and sizes that may allow easier identification from each other. In this way, according to the embodiment of the present disclosure, since the plurality of leveling lines of the filling guide 238 may be identified more easily from each other, the identification accuracy of the leveling line corresponding to the filling height to be filled may be further increased.

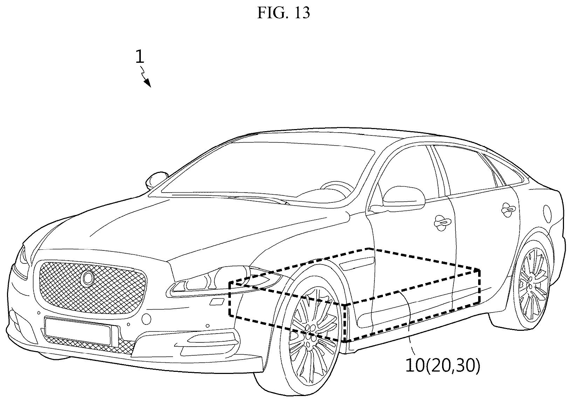

FIG. 13 is a drawing for illustrating a vehicle according to an embodiment of the present disclosure.

Referring to FIG. 13, the vehicle 1 according to an embodiment of the present disclosure may include at least one battery pack 10, 20, 30 according to the above-described embodiment of the present disclosure. In addition, the vehicle 1 according to an embodiment of the present disclosure may further include various other components included in a vehicle, in addition to the battery pack 10, 20, 30. For example, the vehicle 1 according to an embodiment of the present disclosure may further include a vehicle body, a motor, and a control device such as an ECU (electronic control unit), in addition to the battery pack 10, 20, 30 according to an embodiment of the present disclosure.

In addition, the battery pack 10, 20, 30 according to an embodiment of the present disclosure may be provided to other devices, instruments, and equipment, such as an energy storage device (ESS) that uses secondary batteries, in addition to the vehicle 1.

According to various embodiments as above, it is possible to provide a battery pack 10, 20, 30 capable of improving cooling performance, and a vehicle 1 including the battery pack.

In addition, according to various embodiments as above, it is possible to provide a battery pack 10, 20, 30 capable of improving safety, and a vehicle 1 including the battery pack.

Moreover, according to various embodiments as above, it is possible to provide a battery pack 10, 20, 30 capable of improving manufacturing efficiency, and a vehicle 1 including the battery pack.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack comprising:
a plurality of battery cells;
a cell frame configured to accommodate the plurality of battery cells;
a first filling member filled between the plurality of battery cells within the cell frame; and
a second filling member filled within the cell frame to be in contact with the first filling member.

2. The battery pack according to claim 1,
wherein the second filling member is filled to cover the first filling member so that the first filling member is sealed within the cell frame.

3. The battery pack according to claim 1,
wherein the first filling member is filled so that a part of the plurality of battery cells is immersed within the cell frame, and
wherein the second filling member is filled so that the remaining part of the plurality of battery cells is immersed within the cell frame.

4. The battery pack according to claim 1,
wherein the cell frame includes:
a frame body configured to accommodate the plurality of battery cells; and
a frame cover coupled with the frame body and configured to cover an upper side of the plurality of battery cells,
wherein the first filling member is filled to a height equal to or lower than a height of an upper end of the frame body.

5. The battery pack according to claim 4,
wherein the second filling member is continuously filled from the frame cover to a part within the frame body where the second filling member comes into contact with the first filling member.

6. The battery pack according to claim 1,
wherein the first filling member contains a phase change material.

7. The battery pack according to claim 1,
wherein the first filling member contains a paraffin material.

8. The battery pack according to claim 1,
wherein the second filling member is made of the same material as the first filling member.

9. The battery pack according to claim 1,
wherein the second filling member is made of a glass bead resin.

10. The battery pack according to claim 1,
wherein the second filling member is made of silicone foam.

11. The battery pack according to claim 4,
wherein the frame cover includes:
a cover body coupled with the frame body; and
a guide protrusion extending from an edge of the cover body to a predetermined height,
wherein the second filling member is filled up to an end of the guide protrusion.

12. The battery pack according to claim 1,
wherein the frame cover includes a cell insert portion formed on the cover body so that an end of the plurality of battery cells is inserted therein.

13. The battery pack according to claim 1, further comprising:
a heatsink provided at one side of the cell frame to cool the plurality of battery cells.

14. The battery pack according to claim 13,
wherein an opening for exposing an end of the plurality of battery cells toward the heatsink is formed at one side of the cell frame facing the heatsink.

15. The battery pack according to claim 13, further comprising:
an adhesive member provided between the cell frame and the heatsink to seal the first filling member together with the second filling member.

16. The battery pack according to claim 11, further comprising:
a bus bar assembly mounted on the cover body at a bottom portion of the guide protrusion and electrically connected to the plurality of battery cells.

17. The battery pack according to claim 16,
wherein the second filling member is filled to cover the bus bar assembly.

18. A vehicle comprising at least one battery pack according to any one of claims 1 to 17.
